# EUROPÄISCHE PATENTANMELDUNG

(11) **EP 0 930 720 A2**
(43) Veröffentlichungstag der Anmeldung: **21.07.1999**
(21) Anmeldenummer: 99100513.3
(22) Anmeldetag: 12.01.1999
(51) Int. Cl.: H04B 1/16, H04B 1/10, H03G 3/32

(54) **Mobiltelefon und Verfahren zum Betreiben eines Mobiltelefons**

(30) Priorität: 20.01.1998 DE 19801993
(71) Anmelder: SIEMENS AKTIENGESELLSCHAFT, 80333 München (DE)
(72) Erfinder: Ganser, Siegfried, 85570 Markt Schwaben (DE); Sehrig, Peter, 82343 Pöcking (DE)

(57) **Zusammenfassung**

Es werden ein Mobiltelefon und ein Verfahren zum Betreiben eines Mobiltelefons beschrieben. Das Mobiltelefon und das Verfahren zeichnen sich dadurch aus, daß die Empfindlichkeit des HF-Empfangsteils abhängig von der Stärke des vom Mobiltelefon empfangenen Empfangssignals eingestellt wird. Dadurch kann bei gleichbleibend guter oder sogar besserer Funktion des Mobiltelefons und weiterhin geringer Größe, geringem Gewicht und niedrigem Preis desselben eine deutlich erhöhte Standby-Zeit erzielt werden.

## Beschreibung

Die vorliegende Erfindung betrifft ein Mobiltelefon und ein Verfahren zum Betreiben eines Mobiltelefons.

Mobiltelelefone sind in einer Vielzahl von Ausführungsformen bekannt und bedürfen keiner näheren Erläuterung.

Ein sehr wichtiges Qualitätskriterium von Mobiltelefonen ist deren Ausdauer, d.h., die Zeit während welcher sie mit einer Akkuladung betreibbar sind.

Eine Erhöhung dieser sogenannten Standby-Zeit wird insbesondere durch den Einsatz von immer leistungsfähigeren Akkumulatoren und/oder eine Reduzierung der Stromverbrauchs erzielt.

Leistungsfähige Akkumulatoren haben den Nachteil, daß sie groß, schwer und teuer sind.

Die Reduzierung des Stromverbrauchs erfolgt insbesondere über eine Reduzierung der Verlustleistung und ist schon ziemlich weit ausgereizt.

Der vorliegenden Erfindung liegt daher die Aufgabe zugrunde, die bekannten Mobiltelefone derart weiterzubilden und/oder zu betreiben, daß mit diesen bei weiterhin geringer Größe, geringem Gewicht und niedrigem Preis deutlich höhere Standby-Zeiten erreichbar sind.

Diese Aufgabe wird erfindungsgemäß durch das im kennzeichnenden Teil des Patentanspruchs 1 beanspruchte Merkmal (Vorrichtung) bzw. durch das im kennzeichnenden Teil des Patentanspruchs 2 beanspruchte Merkmal (Verfahren) gelöst.

Demnach
- ist das Mobiltelefon mit einer Steuereinrichtung versehen, die dazu ausgelegt ist, die Empfindlichkeit des HF-Empfangsteils abhängig von der Stärke des vom Mobiltelefon empfangenen Empfangssignals einzustellen (kennzeichnender Teil des Patentanspruchs 1) bzw.
- wird die Empfindlichkeit des HF-Empfangsteils abhängig von der Stärke des vom Mobiltelefon empfangenen Empfangssignals eingestellt (kennzeichnender Teil des Patentanspruchs 2)

Durch eine Reduzierung der Empfindlichkeit des HF-Empfangsteils läßt sich dessen Stromverbrauch erheblich senken. Andererseits ist die Reduzierung der Empfindlichkeit des HF-Empfangsteils aber nicht mit einem schlechteren Empfang verbunden, denn die Einstellung der Empfindlichkeit erfolgt ja in Abhängigkeit von der Stärke des empfangenen Signals und kann mithin so durchgeführt werden, daß das HF-Empfangsteil mit hoher Empfindlichkeit betrieben wird, wenn und so lange das empfangene Signal schwach ist, und daß das HF-Empfangsteil mit niedriger Empfindlichkeit betrieben wird, wenn und so lange das empfangene Signal stark ist, was in der Regel überwiegend der Fall ist.

Es lassen sich folglich bei gleichbleibend guter oder sogar besserer Funktion und weiterhin geringer Größe, geringem Gewicht und niedrigem Preis deutlich erhöhte Standby-Zeiten erzielen.

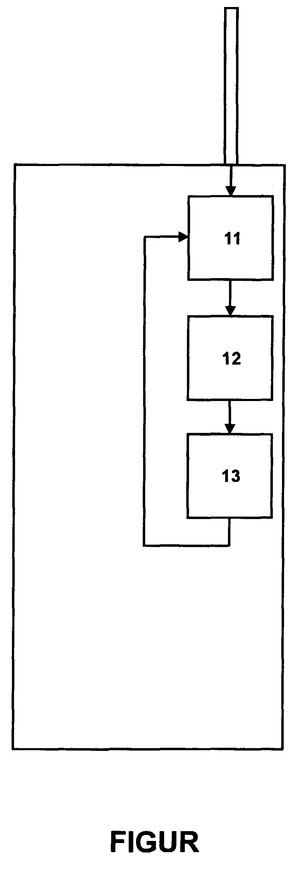

Vorteilhafte Weiterbildungen der Erfindung sind den Unteransprüchen, der folgenden Beschreibung und der Zeichnung entnehmbar.

Die Erfindung wird nachfolgend anhand eines Ausführungsbeispiels unter Bezugnahme auf die Zeichnung näher erläutert.

Die Figur zeigt ausschnittsweise schematisch den Aufbau des beschriebenen Mobiltelefons.

Das nachfolgend näher beschriebene Mobiltelefon sei ein nach dem GSM-Standard arbeitendes Mobiltelefon (ein sogenanntes Handy). Es sei jedoch bereits an dieser Stelle darauf hingewiesen, daß die Erfindung auch bei nach beliebigen anderen Standards arbeitenden Mobiltelefonen anwendbar ist, und dabei auch weder auf eine bestimmte Art der Übertragung (analog und/oder digital) noch auf bestimmte Reichweiten beschränkt ist; das Spektrum erstreckt sich vom einfachen analog arbeitenden Schnurlos-Telefon für den Hausgebrauch bis hin zu den zur Kommunikation über Satelliten ausgelegten Handys. Unter dem Begriff Mobiltelefon mögen dabei auch mobile Funkgeräte und reine Funkempfänger wie beispielsweise die sogenannten Piepser und Babywächter verstanden werden.

Das betrachtete Mobiltelefon umfaßt unter anderem ein HF-Empfangsteil 11, einen Signalstärke-Detektor 12 und eine Steuereinrichtung 13.

Dem HF-Empfangsteil 11 obliegt es, Signale einer bestimmten Frequenz (Hochfrequenz) zu empfangen. Die empfangenen Signale werden noch im HF-Empfangsteil 11 verstärkt und - gegebenenfalls nach einer oder mehreren Frequenzumsetzungen - dort oder anderswo demoduliert.

Im betrachteten Beispiel ist das HF-Empfangsteil 11 dazu ausgelegt, Signale mit einer bestimmten Frequenz im Bereich zwischen 935 und 965 MHz zu empfangen. Die empfangenen Signale werden mittels eines durch einen sogenannten LNA (low noise amplifier) gebildeten (Empfangssignal-)Verstärkers verstärkt, dann in einer oder mehreren Stufen auf eine Zwischenfrequenz umgesetzt, und schließlich demoduliert. Die Umsetzung auf die im sogenannten Basisband liegende Zwischenfrequenz wird durchgeführt, weil sich die Demodulation bei niedrigen Frequenzen einfacher vornehmen läßt. Grundsätzlich kann jedoch auch gleich das empfangene und durch den LNA verstärkte Signal demoduliert werden.

Vorzugsweise nach der Umsetzung der empfangenen Signale ins Basisband, gegebenenfalls aber auch schon vorher oder erst später im Signalverarbeitungspfad wird durch den Signalstärke-Detektor 12 die Stärke des empfangenen Signals (die Empfangsfeldstärke) ermittelt und an die Steuereinrichtung 13 übermittelt.

Die Steuereinrichtung 13 steuert in Abhängigkeit von der Stärke des empfangenen Signals die Empfindlichkeit des HF-Empfangsteils. Sie nimmt im betrachteten Beispiel insbesondere auf das Verhalten und/oder die Eigenschaften des LNA und/oder des oder der Mischer zur Frequenzumsetzung und/oder des Demodulators und/oder anderen Schaltungsteilen Einfluß. Dabei wird in Abhängigkeit von der Stärke des Empfangssignals direkt oder indirekt festgelegt, mit welchem Strom der LNA und die Mischer betrieben werden. Es sei bereits an dieser Stelle darauf hingewiesen, daß alternativ oder zusätzlich auch die Stromzufuhr zu anderen Komponenten des HF-Empfangsteils und/oder anderer Einheiten in Abhängigkeit von der Stärke des Empfangssignals verändert werden kann.

Ist das Empfangssignal schwach, werden die genannten Komponenten des HF-Empfangsteils mit einem eine hohe Empfindlichkeit bewirkenden (großen) Strom betrieben; ist das Empfangssignal stark, werden die genannten Komponenten des HF-Empfangsteils mit einem eine niedrige Empfindlichkeit bewirkenden (geringeren) Strom betrieben.

Die Herabsetzung der Empfindlichkeit des HF-Empfangsteils für die zu empfangenden Signale wirkt sich nicht negativ auf die Funktion des Mobiltelefons aus, denn wenn und so lange sich das Mobiltelefon in Gebieten mit mittleren und starken Empfangssignalen befindet, wird die maximale Empfindlichkeit ja ohnehin nicht benötigt; eine zu große Empfindlichkeit kann unter Umständen sogar zu Verzerrungen führen.

Die Anpassung des Stromflusses (der Empfindlichkeit) an die gegebenen Verhältnisse kann in einer oder mehreren Stufen erfolgen.

Die Steuereinrichtung 13 ist im betrachteten Beispiel softwaremäßig realisiert. Dies erweist sich als besonders einfach, weil im Basisband ohnehin schon eine Reihe von Signalverarbeitungsschritten softwaregesteuert durchgeführt wird.

Die Steuereinrichtung 13 veranlaßt die von ihr angesteuerten Komponenten über den sogenannten Dreileiterbus zur Einstellung des gewünschten Verhaltens und/oder der gewünschten Eigenschaften. Der Dreileiterbus umfaßt, wie die Bezeichnung schon besagt, drei Leitungen. Von den drei Leitungen ist eine zum Leiten eines Enable-Signals, eine zum Leiten eines Taktsignals, und eine zur sequentiellen Übertragung von Daten bestimmt. Kommt die Steuereinrichtung 13 aufgrund der erfaßten Stärke des Empfangssignals zu dem Ergebnis, daß der Stromfluß in den durch sie angesteuerten Komponenten verändert werden muß bzw. kann, so gibt sie das Enable-Signal aus und überträgt dann im Takt des ebenfalls von ihr ausgegebenen Takt-Signals eine bestimmte Anzahl von Bits an die anzusteuernden Komponenten. Von den übertragenen Bits sind ein oder mehrere bestimmte Bits für die Empfindlichkeits-Einstellung reserviert. Die über die Steuereinrichtung anzusteuernden Komponenten erkennen an diesen Bits, wie sie sich zu verhalten haben. Sie können sich in Abhängigkeit von deren Inhalt in eine andere (energiesparende) Betriebsart versetzen oder in sonstiger Weise an die veränderten Umstände anpassen.

In der Regel wird eine hohe Empfangsfeldstärke zur Folge haben, daß die über die Steuereinrichtung angesteuerten Komponenten mit einem geringeren Strom betrieben werden. Dies muß jedoch nicht für alle Komponenten gelten; es ist durchaus vorstellbar, daß einzelne Komponenten mit einem höheren Strom betrieben werden müssen, um Nachteile, die durch die Reduzierung des Stromflusses in den anderen Komponenten entstehen, zu eliminieren. Dies ist selbstverständlich nur sinnvoll, wenn und so lange der Gesamt-Energieverbrauch durch die Herabsetzung der Empfindlichkeit abnimmt.

Obgleich die Steuerung der über die Steuereinrichtung zu steuernden Komponenten über den Dreileiterbus besonders einfach und effizient ist, kann sie selbstverständlich auch beliebig anders erfolgen. Entscheidend für die bestimmungsgemäße Funktion ist in erster Linie, daß die anzusteuernden Komponenten dazu ausgelegt sind, unter Steuerung durch die Steuereinrichtung 13 definiert in ihrem Verhalten und/oder ihren Eigenschaften beeinflußbar zu sein.

Weil sich Mobiltelefone in der Regel überwiegend in Gebieten mit mittleren und starken Empfangssignalen befinden werden, hat die wie beschrieben oder ähnlich erfolgende Reduzierung des Gesamt-Energieverbrauchs zur Folge, daß das betreffende Mobiltelefon mit einer Akkuladung erheblich länger betrieben werden kann als es bisher der Fall ist.

Das beschriebene Mobiltelefon weist mithin bei gleichbleibend guter oder sogar besserer Funktion und weiterhin geringer Größe, geringem Gewicht und niedrigem Preis eine deutlich erhöhte Standby-Zeit auf.

## Patentansprüche

1. Mobiltelefon,
**gekennzeichnet durch**
eine Steuereinrichtung (13), die dazu ausgelegt ist, die Empfindlichkeit des HF-Empfangsteils (11) abhängig von der Stärke des vom Mobiltelefon empfangenen Empfangssignals einzustellen.

2. Verfahren zum Betreiben eines Mobiltelefons,
**dadurch gekennzeichnet,**
daß die Empfindlichkeit des HF-Empfangsteils (11) abhängig von der Stärke des vom Mobiltelefon empfangenen Empfangssignals eingestellt wird.

3. Mobiltelefon oder Verfahren zum Betreiben eines Mobiltelefons nach Anspruch 1 oder 2,
**dadurch gekennzeichnet,**
daß das HF-Empfangsteil (11) auf hohe Empfindlichkeit eingestellt wird, wenn und so lange das Empfangssignal schwach ist.

4. Mobiltelefon oder Verfahren zum Betreiben eines Mobiltelefons nach einem der vorhergehenden Ansprüche,
**dadurch gekennzeichnet,**
daß das HF-Empfangsteil (11) auf niedrige Empfindlichkeit eingestellt wird, wenn und so lange das Empfangssignal stark ist.

5. Mobiltelefon oder Verfahren zum Betreiben eines Mobiltelefons nach einem der vorhergehenden Ansprüche,
**dadurch gekennzeichnet,**
daß die Einstellung der Empfindlichkeit des HF-Empfangsteils (11) durch eine Einstellung des Verhaltens und/oder der Eigenschaften eines Empfangssignal-Verstärkers und/oder von zur Frequenzumsetzung verwendeten Mischern und/oder verwendeten Demodulatoren und/oder sonstigen Schaltungsteilen erfolgt.

6. Mobiltelefon oder Verfahren zum Betreiben eines Mobiltelefons nach einem der vorhergehenden Ansprüche,
**dadurch gekennzeichnet,**
daß die Einstellung der Empfindlichkeit des HF-Empfangsteils (11) über den Dreileiterbus erfolgt.
